(19) Europäisches Patentamt
European Patent Office
Office européen des brevets

(11) Publication number: **0 013 181**
**B1**

(12) **EUROPEAN PATENT SPECIFICATION**

(45) Date of publication of patent specification: **13.10.82**

(51) Int. Cl.³: **C 08 B 37/08** //B01D13/00, B01D15/08, B01J20/24, C08J5/22, D01F9/00

(21) Application number: **79303067.7**

(22) Date of filing: **28.12.79**

(54) **Chitin derivative, material comprising said derivative and process for the preparation thereof.**

(30) Priority: **29.12.78 JP 161389/78**
**29.12.78 JP 161390/78**
**15.06.79 JP 75403/79**

(43) Date of publication of application:
**09.07.80 Bulletin 80/14**

(45) Publication of the grant of the patent:
**13.10.82 Bulletin 82/41**

(84) Designated Contracting States:
**DE FR GB IT NL SE**

(56) References cited:
**DE - C - 894 993**

**AGRICULTURAL AND BIOLOGICAL CHEMISTRY, vol. 42, October 1978, JP. SHIGEHIRO HIRANO et al.: "A facile method for the preparation of novel membranes from N-acyl- and N-arylidene-chitosan gels", pages 1939—40**

**JAPANESE PATENTS GAZETTE, Section Ch, Derwent Publications, London, GB, Week X49 issued 19th January 1977, chapter F, page 2**

(73) Proprietor: **KUREHA KAGAKU KOGYO KABUSHIKI KAISHA**
**8 Horidome-cho, 1-chome Nihonbashi**
**Chuo-ku Tokyo (JP)**

(72) Inventor: **Koshugi, Junichi**
**No. 22 Daiichi-Kurehasoh**
**3-10-13 Nerima Nerima-ku Tokyo (JP)**

(74) Representative: **Myerscough, Philip Boyd et al,**
**J.A.Kemp & Co. 14, South Square Gray's Inn**
**London, WC1R 5EU (GB)**

**EP 0 013 181 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Chitin derivative, material comprising said derivative and process for the preparation thereof

This invention relates to a chitin derivative which is obtained by acylation of a de-N-acetylated and etherified chitin and to a material comprising this derivative. This invention also relates to a process for producing such chitin derivatives and materials.

Fiber-forming polysaccharides occurring in nature are divided broadly into collagen in higher animals, chitin in arthropods and lower plants and cellulose in higher plants. The skeletons of the living things are made by sedimentation of apatite, calcium carbonate and lignin respectively onto these polysaccharides.

Chitin is a mucopolysaccharide of poly-N-acetyl-D-glucosamine. The amount of it in nature compares favorably with the amount of cellulose. However, since chitin is a highly crystalline substance and its intermolecular bonding through aminoacetyl groups is extremely stable, it is very difficult to find an appropriate solvent to dissolve, disperse or swell the chitin satisfactorily. Accordingly, development of the use of chitin resources is far behind that of cellulose and other polysaccharides.

According to the recent research as described in "TANPAKUSHITSU, KAKUSAN and KOSO (Proteins, Nucleic acids and Enzymes)", Vol. 22, No. 13, 1331—1436 (1977), Japanese Patent Publication No. 19213/73, Japanese Patent Laying Open No. 119087/76 and Japanese Patent Publication No. 24067/77, films or fibers consisting of a regenerated chitin can be obtained by the acetylation of a chitosan by utilizing the properties of chitosan dissolved in an aqueous dilute acid solution.

Japanese Patent Publication No. 19213/73 discloses a method for obtaining a film of a regenerated chitin by making a film of chitosan followed by acetylating the thus-formed film in the solid phase. The method comprises a series of steps. First, the chitosan is dissolved in an aqueous dilute acid solution. A film of a chitosan-salt obtained by evaporating off water is immersed in an aqueous dilute alkali solution or a water-containing solution of an organic base in a solvent therefor to prepare the film of chitosan. After swelling the thus obtained film of chitosan in water, the swollen film is soaked in a solvent such as ethanol, acetone or pyridine and is N-acetylated with acetic acid in the presence of a dicyclohexylcarbodiimide dehydrating condensation agent to obtain a film of regenerated chitin. However, it takes a long time to complete the acetylation. Moreover, the object of the published reference is to obtain film-shaped articles consisting of regenerated chitin. The use of the regenerated chitin as an acoustic vibrator plate is only suggested. Accordingly, this method is still unsatisfactory from the view point of utilization of chitin resources.

Other methods of N-acetylation of chitosan involve reacting chitosan with acetic anhydride in a solution of pyridine or reacting chitosan with acetic anhydride in a perchloric acid solution. However, also in these methods it takes a long time to complete the acetylation. Especially where the chitosan contains water, acetylation proceeds very slowly.

It has now surprisingly been found that when a de-N-acetylated carboxyalkyl-chitin, chitin etherified with ethylene glycol, propylene glycol or glycerol or an alkylchitin (hereinafter referred to as a de-N-acetylated and etherified chitin) is reacted with an anhydride of an organic acid, the de-N-acetylated and etherified chitin is acylated instantly. The acylated product (hereinafter referred to as a denatured chitin) is insoluble in water, acids, alkaline solutions and organic solvents. This technique can be used to make shaped materials at least the outer surface of which comprises denatured chitin.

Accordingly, the present invention provides a chitin derivative obtained by acylation of a de-N-acetylated and etherified chitin represented by the formula (1):

$$[C_6H_8O_3 . (NH_2)_x . (NHCOCH_3)_y . (OR)_a . (OH)_b]_n \quad (1)$$

wherein R represents at least one group selected from a carboxylalkyl group with two to four carbon atoms, a hydroxyethyl group, a hydroxypropyl group, a dihydroxypropyl group or an alkyl group with one to three carbon atoms, $x$ is a number of 0.1 to 1.0, $y = 1.0 - x$, $a$ is a number of 0.1 to 1.0, and $b = 1.0 - a$,

or a salt thereof.

The present invention also provides a material, which may be shaped, at least the outer surface of which comprises such a chitin derivative.

The present invention further provides a process for the production of such a chitin derivative or material, which process comprises contacting the de-N-acetylated and etherified chitin or a salt thereof with an anhydride of an organic acid.

The chitin derivative can be employed as a separating material, a base material on which enzymes are immobilized, a dialysis membrane and an adsorbent material.

The material of the present invention can be a material of which the surface layer comprises denatured chitin (the chitin derivative of the present invention) and the interior of which comprises unacylated de-N-acetylated and etherified chitin or a salt thereof, or a material wholly or substantially wholly comprising the denatured chitin. Alternatively, it is possible to coat various materials such as an

ion-exchange resin or activated carbon particles with denatured chitin to produce a material according to the invention.

The chitin derivative of the present invention is preferably produced by bringing an aqueous solution of the de-N-acetylated and etherified chitin into contact with an anhydride of an organic acid or with a mixture of the anhydride and an organic acid. The time necessary for acylation is shorter, in spite of the presence of water, than that for the acetylation of chitosan mentioned previously. However, the theoretical basis for this has not been clarified. In the present invention, this rapid acylation facilitates the formation of materials in the form of a granule, sphere, film, fiber, hollow fiber, rod or any other three-dimensional structure.

The chitin derivative of the present invention is chemically and physiologically stable and safe, and possesses excellent permeability, adsorbability and biocompatibility. Accordingly, it is possible to use it in a wide variety of fields, for instance, as a material for capsules, a separating material, an adsorbent, a material for catching heavy metals, a material for slow-releasing medicines, a base material for immobilized enzymes, a material for ultrafiltration, a material for an artificial kidney, an artificial blood vessel and an artificial skin, a material for edible films and dietary fibers, and a material for ion-exchange films.

The de-N-acetylated and etherified chitin represented by the formula (I) may be obtained by reacting chitin with an etherifying agent and then de-N-acetylating the etherified product.

Chitin is a naturally occurring mucopolysaccharide of formula (II):

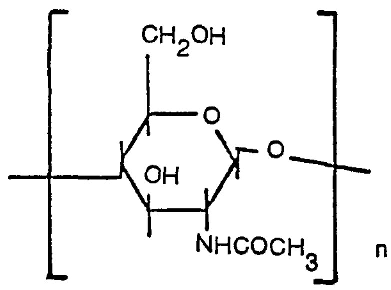

(II)

wherein *n* denotes the degree of polymerization.

Although *n* in the formula (II) can not be determined accurately because at present there is no good solvent for chitin, *n* is believed to be commonly in the range of 50 to 10,000.

An etherified chitin can be prepared by reacting chitin with a corresponding etherifying agent, for instance, chloroacetic acid, ethylene glycol, glycerol or an alcohol in a method known *per se*. The etherified chitin has the formula (III):

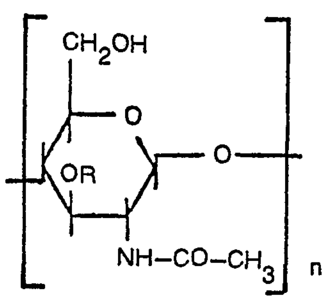

or

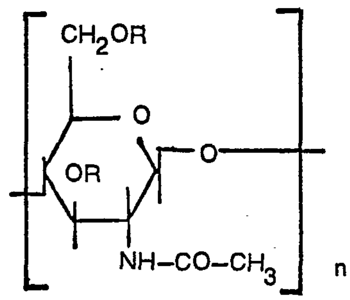

or

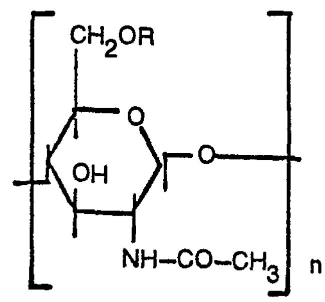

(III)

wherein R represents a carboxyalkyl group with two to four carbon atoms, a hydroxyethyl group, a hydroxypropyl group, a dihydroxypropyl group or an alkyl group with one to three carbon atoms.

The ether-linkage in the etherified chitin may be, as shown in formula (III), on the 3-carbon on the pyranose ring and/or on the 6-carbon which is bonded to the pyranose ring. The ether-linkage at the 3-carbon is assumed to be predominant. The etherified chitin can have a degree of etherification, on average of 0.1 to 1.0, preferably 0.3 to 1.0 per pyranose ring.

Etherification may be carried out using at least two kinds of etherifying agents. Accordingly, etherified chitins having at least two kinds of substituents can be prepared. The substituents are the same as the R substituents in the de-N-acetylated and etherified chitins of formula (I). De-N-acetylation and subsequent acylation of the thus-obtained etherified chitin leads to formation of the chitin derivative of this invention. That is, etherified chitins with two or more different ether-linkages per molecule can be employed in the production of materials of the present invention.

De-N-acetylation of the etherified chitin can be achieved by heating the etherified chitin in an aqueous concentrated solution of alkali such as sodium hydroxide or potassium hydroxide. The de-N-acetylated and etherified chitin preferably has a degree of de-N-acetylation of, on average, 0.1 to 1.0 per pyranose ring. Bearing in mind the solubility and viscosity of the de-N-acetylated and etherified chitin in aqueous solution, the degree of de-N-acetylation of de-N-acetylated carboxymethylchitin, de-N-acetylated carboxyethylchitin, de-N-acetylated carboxypropylchitin, de-N-acetylated hydroxyethylchitin, de-N-acetylated hydroxypropylchitin, and de-N-acetylated dihydroxypropylchitin is preferably 0.2 to 0.6. For similar reasons, the degree of de-N-acetylation of de-N-acetylated methylchitin, de-N-acetylated ethylchitin and de-N-acetylated propylchitin is 0.5 to 1.0, preferably 0.5 to 0.9.

The de-N-acetylated and etherified chitin is soluble in an aqueous solution of an organic acid such as acetic acid or oxalic acid or of an inorganic acid such as hydrochloric acid, which has a concentration sufficient to dissolve the de-N-acetylated and etherified chitin. Although the de-N-acetylated and etherified chitins with a higher degree of de-N-acetylation have a tendency to react slower with an acylation agent, they are more easily soluble in the aqueous solution as compared with chitosan. Their viscosity in the aqueous solution is also smaller than that of the chitosan. Accordingly, they can be utilized in a more highly concentrated solution than chitosan. It is therefore possible to obtain a chitin derivative which acts as a molecular sieve over a broad range of molecular diameter, larger than that of chitosan.

The chitin derivative of the present invention is produced by converting the de-N-acetylated and etherified chitin of formula (I) into the denatured chitin. This conversion is performed by acylating the de-N-acetylated and etherified chitin in an aqueous solution with an anhydride of organic acid. In order to perform the acylation, first the aqueous solution of the de-N-acetylated and etherified chitin is prepared. This can be easily obtained by dissolving this chitin in an aqueous dilute acid solution.

Alternatively, an aqueous solution of the de-N-acetylated and etherified chitin can be obtained by dissolving a salt of the de-N-acetylated and etherified chitin in water. The salt may be an alkali metal salt, alkaline earth metal salt or ammonium salt of a de-N-acetylated carboxyalkylchitin, or, for example, an acetate or hydrochloride of a de-N-acetylated and etherified chitin. Further, a de-N-acetylated carboxyalkylchitin dissolves in an alkaline solution.

The concentration of de-N-acetylated and etherified chitin in the aqueous solution affects the strength and the density of the shaped material that is produced. When the concentration is relatively high, a chitin derivative with a larger strength and which is denser is obtained. Such a derivative exhibits a molecular sieve effect on the larger molecules. Usually the concentration of the de-N-acetylated and etherified chitin in the aqueous solution may be from 1 to 10% by weight. However, the concentration should be adequately adjusted according to the end use and desired properties of the chitin derivative of the present invention, and it is not necessarily restricted to this range.

When the viscosity of the aqueous solution of the de-N-acetylated and etherified chitin is high, sometimes it is difficult to obtain spherical or other materials with a small diameter. In such a case, a viscosity-reducing agent such as ethylene glycol, glycerol or an alcohol may be added to the aqueous solution.

In the process of the invention, the anhydride of an organic acid and the organic acid which may also be present can be an aliphatic or aromatic organic acid with one to twenty carbon atoms or an anhydride thereof, for example, acetic acid, propionic acid, butylic acid, valeric acid, benzoic acid and their anhydrides. The anhydride of an organic acid used in acylating the de-N-acetylated and etherified chitin may be one of the above-mentioned anhydrides or a mixture of two or more thereof. Although the amount of acylating agent is not particularly critical, it is usually employed in an amount of 1 to 100 equivalents, preferably 5 to 20 equivalents per equivalent of amino groups in the de-N-acetylated and etherified chitin.

The anhydride of an organic acid may be used as it is without dilution, or may be diluted with an organic acid or with an organic solvent which does not react with the anhydride, for instance, benzene, toluene, xylene or decalin to control the reaction velocity or facilitate treatment of rection product. In addition, in order to facilitate control of the state of dispersed particles of the de-N-acetylated and etherified chitin in the organic acid anhydride, the organic solvent is preferably added to the reaction system in an amount of 10 to 1,000 times by weight, preferably 10 to 500 times by weight, of the solution of the de-N-acetylated and etherified chitin.

The temperature of acylation is preferably 5 to 80°C, more preferably 5 to 60°C. When a de-N-acetylated and etherified chitin with a degree of de-N-acetylation of more than 0.6 is acylated, a higher temperature is preferable.

Although the mechanism of acylation has not been elucidated, the reaction takes place at once when an aqueous solution of the de-N-acetylated and etherified chitin is brought into contact with the organic acid anhydride. The reaction proceeds from the surface of the aqueous solution and an insoluble membrane consisting of acylated denatured chitin is formed on the surface of the aqueous solution. The interior of the thus formed membrane is still in the form of an aqueous solution. As the reaction proceeds further, the organic acid anhydride diffuses into the interior via the membrane to effect acylation therein gradually, and thereby the interior is insolubilized.

Accordingly, the present invention can provide a shaped material the surface layer of which

comprises insolubilized denatured chitin and the interior of which comprises unacylated de-N-acetylated and etherified chitin or a salt thereof, depending on how far acylation has proceeded. In the case where the de-N-acetylated and etherified chitin is a de-N-acetylated carboxyalkylchitin, the interior of the material having only its surface layer insolubilized comprises a de-N-acetylated carboxyalkylchitin which is an amphoteric and polymeric electrolyte having amino groups and carboxyl groups. Accordingly, it is possible to apply such a material over a wide variety of fields due to the amphoteric electrolyte of its interior. For example, such a material may be employed as a base material for immobilizing both the acid-resistant enzymes and the alkali-resistant enzymes.

Acylation predominantly takes place at the N-atom which is bonded to the 2-carbon atom of the pyranose ring as shown, for example, by the following formula (IV) to (VI). Since the ether linkage in the de-N-acetylated and etherified chitin is apt to be broken during acylation acylation may also occur'at the O-atom which is bonded to the 3-carbon atom of the pyranose ring or the 6-carbon atom which is bonded to the pyranose ring as in the following formula (VI):

$$C_6H_8O_3 . (OR) . NHCOR' \qquad (IV)$$

$$C_6H_8O_3 . (OH) . NHCOR' \qquad (V)$$

$$C_6H_8O_3 . (OCOR') . NHCOR' \qquad (VI)$$

wherein R has the same meaning as in formula (I) and R′ is an alkyl or aryl group.

In the chitin derivative of the present invention, the proportion of the product of formula (IV) is usually less than 10%. The rest is mainly the products of formula (V) and (VI). Accordingly, the chitin derivative is insoluble in acids and aqueous alkaline solution.

The mode of contact between the aqueous solution of the de-N-acetylated and etherified chitin and the organic acid anhydride can be selected depending on the end-use and desired shape of the chitin derivative of the present invention. For instance, the aqueous solution of the de-N-acetylated and etherified chitin may be added dropwise and dispersed in the organic acid anhydride under agitation. In this case, reaction takes place at once at the surface of the drops to form an insolubilized membrane of denatured chitin, resulting in spherical capsule-like products. Where the reaction progresses further, the acid anhydride diffuses into the interior of the drop to form a thicker film. After letting the reaction proceed for a predetermined period of time, the thus-formed product is separated and washed with water to remove unreacted anhydride. The material thus prepared has only its surface layer infusibilized. The size of the spherical product can be adjusted within a broad range, for example a diameter of about $10^{-6}$ m (1 $\mu$) to $10^{-2}$ m (10,000 $\mu$), by varying the size of the drops. The thickness and compactness of the insolubilized surface layer can be varied, by controlling the concentration of the aqueous solution of the de-N-acetylated and etherified chitin and the time and temperature of the reaction to within a thickness range of $10^{-7}$ m (0.1 $\mu$) to $10^{-3}$ m (1,000 $\mu$) and a compactness range with a permeable threshold of from 500 to 400,000 in molecular weight. It will of course be appreciated that further progress of the reaction leads to the production of a spherical material composed substantially wholly of insolubilized denatured chitin.

In the above-mentioned mode of contact, in order to form droplets of aqueous solution of the de-N-acetylated and etherified chitin and to disperse the thus-formed droplets in the acid anhydride, a vessel provided with a stirrer of the blade type, such as a static mixer or a homogenizer, may be utilized. Further, a suspending agent may be added to the organic acid anhydride. The suspending agent used in the present invention is preferably non-ionic, for instance, polyoxyethylene sorbitol, polyoxyethylene stearate, polyoxyethylene alkyl ether or sorbitan monolaurate. The amount of suspending agent is usually in the range of 0.001 to 10% by weight of the amount of the aqueous solution of the de-N-acetylated and etherified chitin. In addition, by spraying an aqueous solution of the de-N-acetylated and etherified chitin into a mist of the acid anhydride, ultramicrospherical particles can be obtained. The surface layer of the ultramicrospherical droplets is infusibilized instantly by acylation.

Another mode of contacting the de-N-acetylated and etherified chitin and the organic acid anhydride is to sping the aqueous solution of the de-N-acetylated and etherified chitin through nozzles into a liquid containing the organic acid anhydride to obtain a fiber at least the surface of which is infusibilized. By washing the fiber a fiber-shaped material of the present invention can be obtained. A hollow fiber can also be obtained by spinning a hollow fiber in known manner.

In addition, by utilizing slits in place of nozzles, films of chitin derivative can be obtained. In the case of producing either fibers or films, it is possible to adjust the thickness and compactness of the infusibilized chitin derivative depending on necessity, as in the case of the spherical materials described previously.

Several other techniques can be used to cause the de-N-acetylated and etherified chitin to contact the acid anhydride. This enables the materials of the present invention to take any three-dimensional structure.

The chitin derivatives of the present invention may be cross-linked, if necessary. One such cross-linking treatment is as follows.

First, the moisture content of the chitin derivative is adjusted so as to be 2 to 3 times by weight the weight of the dry derivative. Then the derivative is soaked in an aqueous sodium hydroxide solution having a concentration more than 40% by weight. The weight of this solution is more than twice preferably 4 to 30 times by weight of the dry derivative. The derivative is soaked at a temperature lower than 15°C for one to 5 hours. After that, excess sodium hydroxide solution is removed and the soaked material is left to stand in the aqueous sodium hydroxide solution, present in an amount of 3 to 6 times by weight of the dry derivative, at a temperature of 0 to 10°C for one to 24 hours to obtain a material pre-treated with alkali. Optionally the pre-treated material may be freeze-dried at a temperature of 0 to −30°C for one to 24 hours. The pre-treated material is then dispersed in an aqueous solution or an organic solvent containing a cross-linking agent in an amount of 0.1 to 3 moles, preferably 0.5 to 2 moles, per mole of pyranose rings and is made to react at a temperature of lower than 15°C for 5 to 48 hours. When the reaction has been completed, the reaction product is washed and neutralized to obtain a crosslinked chitin derivative. The cross-linking agent may be an epoxy type cross-linking agent such as epichlorohydrin, epibromohydrin, 2,3-dibromopropanol or 2,3-dichloropropanol. The degree of cross-linking may be sufficient at 0.01 to 0.3 per pyranose ring. When the interior of a material of the present invention is not acylated or insolubilized, the cross-linking agent may be an aldehyde, such as formaldehyde, glyoxal or glutaraldehyde, which forms a Schiff base with the de-N-acetylated and etherified chitin in the interior of the material.

The chitin derivative of the present invention can take the form of a granule, sphere, fiber, film, rod, tube or the like. It may be a hollow structure. In addition, it is also possible to obtain materials with a cellular structure by freeze-drying gel-like chitin derivatives of the present invention.

Since the chitin derivative of the invention is composed of chemically and biologically stable and safe denatured chitin and is permeable, it can be used over a broad range of applications. It can be used, for instance, in the separation and purification of polysaccharides, proteins, and mixtures thereof by immersing the shaped material in an aqueous solution of polysaccharides and/or proteins of various molecular weights. Only substances with a molecular weight less than a predetermined value pass into the material. Filamentous or film-like materials can be used in the same way as conventional materials for dialysis. Moreover, utilizing the controllability of its permeability and the presence of ionic groups in its structure, the chitin derivative can be employed as an ion-exchange body. Because of the stability and safety of the chitin derivative in living bodies, it is possible to use it, for example for blood perfusion, for an adsorbent of gastrointestinal toxins or as a coating agent for an adsorbent. In the case where the chitin derivative contacts blood, it is preferable to adjust the acylation so as to leave some free amino groups and then to make a polyion with an anti-thrombolytic agent such as heparin, chitosan sulfate or chitin sulfate.

It is possible to confine several useful substances within an outer coating of the chitin derivative of the present invention. For instance, several ion-exchange resins can be contained within such a film. A novel ion-exchange body coated by a chitinic membrane is thus produced having ion-exchange activity limited to substances with a molecular weight less than a predetermined value. By coating an adsorbent such as activated carbon with an outer film of denatured chitin, an adsorbent having a novel functional ability can be obtained.

The following Examples illustrate the present invention. Percentages are by weight unless otherwise specified.

### Example 1

After dissolving $5 \times 10^{-2}$ kg (50 g) of the sodium salt of a de-N-acetylated carboxymethylchitin having a degree of carboxymethylation of 1.0 and a degree of de-acetylation of 0.5 in $9.5 \times 10^{-4}$ $m^3$ (950 ml) of water at a concentration of 5%, the resulting solution was added dropwise to a mixture of $5 \times 10^{-3}$ $m^3$ (5 liters) of acetic anhydride and $10^{-3}$ $m^3$ (1 liter) of acetic acid under agitation at a temperature of 25°C. An insoluble substance precipitated 10 minutes after the end of the addition. The precipitate was filtered, washed and dried to obtain a spherical product $2 \times 10^{-5}$ m (20 $\mu$) to $10^{-4}$ m (100 $\mu$) in diameter. The yield was $4.8 \times 10^{-2}$ kg (48 g).

After pulverizing $10^{-2}$ kg (10 g) of the product, it was added to $10^{-4}$ $m^3$ (100 ml) of an aqueous 5% sodium hydroxide solution under agitation. The mixture was neutralized. The neutralized mixture was filtered to obtain an insoluble substance, which was washed with water and then with ethanol and then dried. The filtrate was condensed by an evaporator and then freeze-dried. However, no residue was obtained.

The results of the elementary analysis of the dried product thus-obtained are shown in Table 1. The elementary analytical data of chitin and the carboxymethylchitin used in Example 1 are also shown in Table 1.

TABLE 1
Elementary Analytical Data (%)

| | C | H | O | N |
|---|---|---|---|---|
| Product of Example 1 | 46.0 | 6.6 | 40.8 | 6.6 |
| Chitin | 47.3 | 6.4 | 39.4 | 6.9 |
| Carboxymethylchitin | 44.9 | 5.8 | 43.4 | 5.9 |

Table 1 shows that the elementary analytical data of the product of Example 1, which is a spherically shaped material comprising a chitin derivative of the invention, is quite similar to that of the chitin.

Example 2

$2 \times 10^{-2}$ kg (20 g) of a de-N-acetylated carboxymethylchitin having a degree of carboxymethylation of 0.5 and a degree of de-N-acetylation of 0.25 was dissolved in $1.8 \times 10^{-4}$ $m^3$ (180 ml) of an aqueous sodium hydroxide solution. The solution was de-aerated under reduced pressure to obtain an aqueous solution of the de-N-acetylated carboxymethylchitin. A fiberous shaped material was obtained by spinning the aqueous solution thus obtained using a spinning apparatus, which was provided with a tank for the aqueous solution of the de-N-acetylated carboxymethylchitin, a reaction vessel $5 \times 10^{-2}$ m (50 mm) in diameter and 3 m (3,000 mm) long provided with 25 nozzles each $5 \times 10^{-5}$ m (0.05 mm) in diameter, a solvent-removing vessel containing an aqueous 50% ethanol solution, another solvent-removing vessel containing hot water at a temperature of 100°C and a take-up winder. In the reaction vessel, propionic anhydride was placed at a temperature of 20°C. The pressure of the output of the aqueous solution of the de-N-acetylated carboxymethylchitin from the nozzle-hole into the reaction vessel was $1.96 \times 10^5$ Pa (2 kg/$cm^2$) for spinning.

Since no soluble component in the thus-obtained fiberous product was obtained by treating the product as in Example 1, the product of this Example was considered to consist of the insoluble denatured chitin derivative of the invention. Table 2 shows the elementary analytical data of the product of Example 2.

TABLE 2

Elementary Analytical Data (%)

| | C | H | O | N |
|---|---|---|---|---|
| Product of Example 2 | 50.0 | 6.4 | 36.8 | 6.8 |
| de-N-acetylated carboxymethylchitin | 47.1 | 5.8 | 41.0 | 6.1 |

Example 3

$1.7 \times 10^{-2}$ kg (17 g) of the dried product obtained in Example 1 were swollen in distilled water and packed into a glass column of $2 \times 10^{-2}$ m (2 cm) in diameter. Using this column, a gel-filtration test was performed. A mixed specimen comprising $2 \times 10^{-5}$ kg (20 mg) of blue dextran (molecular weight of 2,000,000) and $3 \times 10^{-5}$ kg (30 mg) of glucose dissolved in $2 \times 10^{-6}$ $m^3$ (2 ml) of distilled water was added to the column. Elution was carried out with distilled water at a velocity of $1.66 \times 10^{-8}$ $m^3$/s (1 ml/min). Blue dextran was eluted in $3 \times 10^{-5}$ to $4.5 \times 10^{-5}$ $m^3$ (30 to 45 ml) of the eluate and the glucose was eluted in $6.5 \times 10^{-5}$ to $8.0 \times 10^{-5}$ $m^3$ (65 to 80 ml) of the eluate.

These results show that the spherical product obtained in Example 1 can separate substances, and that the blue dextran having a molecular weight of 2,000,000 had not diffused within the spherical product.

Examples 4 to 6

Spherical products were produced using the other de-N-acetylated carboxymethylchitins under different conditions (the concentration of the de-N-acetylated carboxymethylchitin in the aqueous solution, the acylating agent and the reaction conditions) from those used in Example 1. The conditions and results are shown in Table 3. As is shown in this Table, acylation is carried out within a very short period of time.

TABLE 3

Conditions and Results of Acylation

| Example | de-N-acetylated carboxymethylchitin | | | Acylating agent | Reaction | | Elementary analytical data (%) | | | |
|---|---|---|---|---|---|---|---|---|---|---|
| | *A | **B | ***C | | Temp. (°C) | Period (min) | C | H | O | N |
| 4 | 0.5 | 0.5 | 8 | Propionic anhydride | 25 | 5 | 50.5 | 6.7 | 36.4 | 6.4 |
| 5 | 1.0 | 0.5 | 5 | acetic anhydride/ acetic acid (1:1) | 20 | 5 | 52.0 | 7.6 | 34.5 | 5.9 |
| 6 | 1.0 | 1.0 | 10 | acetic anhydride/ acetic acid (2:1) | 50 | 10 | 46.5 | 6.9 | 39.7 | 6.9 |

Note: *A: degree of carboxymethylation.

**B: degree of de-N-acetylation

***C: concentration (% by weight).

Example 7

In this Example, a spherically shaped material the surface layer of which comprises the insoluble denatured chitin derivative of the invention is prepared. This is hereinafter referred to as a microcapsule.

$10^{-2}$ kg (10 g) of the sodium salt of a de-N-acetylated carboxymethylchitin having a degree of carboxymethylation of 1.0 and a degree of de-N-acetylation of 0.5 were dissolved in $1.9 \times 10^{-4}$ $m^3$ (190 ml) of water to form an aqueous solution with a concentration of 5%. This solution was added dropwise to a mixture of $10^{-3}$ $m^3$ (1,000 ml) of acetic anhydride and $5 \times 10^{-5}$ $m^3$ (50 ml) of acetic acid under agitation at a temperature of 15°C. After 2 minutes, an insoluble surface membrane had formed on the dispersed drops. The solidified particles thus-obtained were filtered and washed with water to obtain microcapsules of $2 \times 10^{-5}$ m (20 $\mu$) to $10^{-4}$ (100 $\mu$) in diameter.

$5 \times 10^{-2}$ kg (50 g) of these microcapsules were pulverized in a mixer and placed in an alkaline solution. The insoluble component in the microcapsules was collected and washed several times with ethanol and dried. The soluble component in the microcapsules was condensed in an evaporator and freeze-dried. Their weights and the elementary analytical data are shown in Table 4.

Table 4

| | Weight-kg (g) | Elementary analytical data (%) C | H | O | N |
|---|---|---|---|---|---|
| insoluble component | $5 \times 10^{-4}$ (0.5) | 46.0 | 6.6 | 40.8 | 6.6 |
| soluble component | $2 \times 10^{-3}$ (2.0) | 45.0 | 6.0 | 42.9 | 6.1 |

As seen in Table 4, the insoluble component of the microcapsules was very similar to chitin, and the soluble component of the microcapsules comprised the 50% de-acetylated carboxymethylchitin.

Example 8

The procedure of Example 2 was repeated under the same conditions as used in that Example, except that a reaction vessel $5 \times 10^{-2}$ m (50 mm) in diameter and 1 m (1,000 mm) in length provided with 50 nozzles each $10^{-4}$ m (0.1 mm) in diameter was employed.

Since the length of the reaction vessel was shorter than that of Example 2, the degree of acylation of the product of spinning was lower. The surface layer of the fibers thus-obtained consisted of the insoluble denatured chitin derivative of the invention. The interior of the fibers consisted of de-N-acetylated carboxymethylchitin which was soluble in alkaline solution. $5 \times 10^{-2}$ kg (50 g) of the fibers were analyzed by the same method as in Example 7 to find the weights of the soluble and insoluble components of the fibers and their elementary analytical data. The results are shown in Table 5.

TABLE 5

| | Weight-kg (g) | Elementary Analytical Data (%) C | H | O | N |
|---|---|---|---|---|---|
| insoluble component | $5 \times 10^{-3}$ (5) | 50.0 | 6.4 | 36.8 | 6.8 |
| soluble component | $4.5 \times 10^{-2}$ (45) | 46.6 | 6.3 | 41.0 | 6.1 |

Example 9

The microcapsules obtained in Example 7 were tested for the adsorbing and dialysis properties of their surface layer as follows:

At first, five $10^{-5}$ $m^3$ (10 ml) test solutions each containing a solute of different molecular weight at a predetermined concentration in an aqueous physiological saline solution were prepared in five flasks. The solutes and their initial concentrations are shown in Table 7.

$5 \times 10^{-3}$ kg (5 g) of the microcapsules of Example 7 were introduced into each flask. After stirring at room temperature for two hours, the concentration of the solute dissolved in the solution was determined. The solute concentration after stirring is shown in Table 6.

TABLE 6
Concentration Change

| Solute | Initial concentration (ppm) | Concentration after 2 hours of stirring (ppm) | Calcd. Value* (ppm) |
|---|---|---|---|
| Glucose | 1,000 | 680 | 667 |
| Dextran of molecular weight of 10,000 | 500 | 340 | 333 |
| Dextran of molecular weight of 70,000 | 500 | 350 | 333 |
| Dextran of molecular weight of 500,000 | 500 | 480 | 333 |
| Dextran of molecular weight of 2,000,000 | 500 | 490 | 333 |
| Albumin of molecular weight of 50,000 | 500 | 200 | 333 |

* The calculated value is the concentration of the solute calculated based on the assumption that the concentration of the solute in the microcapsule is the same as that in the test solution.

No change was observed in the appearance of the microcapsule. The weight of the microcapsule after the test was nearly equal to the initial weight thereof before the test.

As indicated in Table 6, the dextran with a molecular weight of 70,000 or less, the glucose and the albumin easily pass through the surface layer of the microcapsule. The concentration of albumin in the test solution after the test is lower than the calculated value thereof, which shows that the albumin is absorbed by the microcapsules. The test solution of albumin after the test is not opaque but clear.

Further, Table 6 indicates that substances with a molecular weight of 70,000 or less easily pass through the surface layer of the microcapsule but that substances with a molecular weight of 500,000 or more hardly pass through the surface layer.

Example 10

Microcapsules were produced as in Example 7 but using different de-N-acetylated carboxymethylchitins, different acylating agents and different reaction conditions. The conditions and the results obtained are shown in Table 7.

TABLE 7

| de-N-acetylated carboxymethylchitin | | | Acylating agent | Reaction | | Results | | | | |
|---|---|---|---|---|---|---|---|---|---|---|
| | | | | | | Elementary analytical data (%) | | | | |
| *A | **B | ***C | | Temp. (°C) | Period (min) | C | H | O | N | ****D |
| 0.5 | 0.5 | 8 | propionic anhydride | 20 | 2 | 50.2 | 6.7 | 36.7 | 6.4 | 80/20 |
| 1.0 | 0.5 | 5 | butyric anhydride | 15 | 2 | 52.1 | 7.5 | 34.4 | 6.0 | 75/25 |
| 1.0 | 1.0 | 10 | acetic anhydride | 50 | 5 | 46.5 | 6.8 | 39.9 | 6.8 | 85/15 |

Notes: *A: Degree of carboxymethylation.

**B: Degree of de-acetylation.

***C: Concentration in aqueous solution (% by weight).

****D: Ratio of soluble component /insoluble component.

Example 11

Spherical particles of activated carbon sifted to a diameter of $2.5 \times 10^{-4}$ to $6.0 \times 10^{-4}$ m (0.25 to 0.60 mm) were immersed in an aqueous 5% solution of a de-N-acetylated carboxymethylchitin having a degree of carboxymethylation of 0.8 and a degree of de-N-acetylation of 0.4. After filtering the mixture and removing excess aqueous solution with a metal net of 80 mesh, the particles were left to stand at the room temperature, and dried until coagulation of the particles almost disappeared. These semi-dried particles were added to a mixture of butyric anhydride and butyric acid in a ratio of 90/10 maintained at a temperature of 40°C under agitation and were left to react for 2 minutes. After filtering the thus-treated particles, these were washed with an aqueous 50% ethanolic solution to remove the butyric mixture. The particles were further repeatedly washed with distilled water and dried to obtain spherical particles of activated carbon coated by the insoluble denatured chitin derivative of the invention. For comparative purposes, spherical particles of activated carbon coated with gelatine were produced.

$5 \times 10^{-2}$ kg (0.5 g) of each of particles of activated carbon coated by the chitin derivative of the invention, those coated by gelatin and those not coated at all were respectively added to two aqueous solutions, one of which contains creatinine at a concentration of 200 ppm in $10^{-4}$ $m^3$ (100 ml) and the other of which contains vitamin $B_{12}$ at a concentration of 200 ppm in $10^{-4}$ $m^3$ (100 ml). The mixtures were agitated. The results of the determination of the concentration of creatinine and vitamin $B_{12}$ in these solutions as time passed are shown in Tables 8 and 9. Their concentrations show a gradual reduction with time because of their adsorption by the activated carbon.

TABLE 8

Reduction of Concentration of Creatinine

| | Concentration of Creatinine (ppm) | | | | | |
|---|---|---|---|---|---|---|
| Activated Carbon | Time (hour) | 0 | 1 | 2 | 4 | 6 |
| Not coated | | 200 | 45 | 25 | 18 | 14 |
| Coated with the chitin derivative of the invention | | 200 | 55 | 31 | 20 | 15 |
| Coated with gelatine | | 200 | 80 | 43 | 35 | 30 |

TABLE 9

Reduction of Concentration of Vitamin $B_{12}$

| | Concentration of Vitamin $B_{12}$ (ppm) | | | | | |
|---|---|---|---|---|---|---|
| Activated Carbon | Time (hour) | 0 | 1 | 2 | 4 | 6 |
| Not coated | | 200 | 145 | 80 | 55 | 35 |
| Coated with the chitin derivative of the invention | | 200 | 160 | 92 | 61 | 38 |
| Coated with gelatin | | 200 | 195 | 182 | 160 | 133 |

As seen from Tables 8 and 9, the creatinine of a smaller molecular weight was adsorbed onto the activated-carbon coated by the chitin derivative of the invention at nearly the same velocity as the velocity at which it was adsorbed onto the uncoated activated-carbon. The same also occurred in the case of the vitamin $B_{12}$ which has a far larger molecular weight. It is believed that the creatinine and the vitamin $B_{12}$ can pass virtually unimpeded through the coating layer of the chitin derivative of the invention on the activated carbon. Consequently, it is suggested that the permeability of the chitin derivative is fairly large.

In the case of the gelatin-coated activated-carbon particles, the velocity at which adsorption occurred was a little reduced with creatinine and was highly reduced with vitamin $B_{12}$, which suggests that the gelatin layer has a smaller permeability.

Example 12

$5 \times 10^{-3}$ kg (5 g) of a de-N-acetylated chitin etherified with ethylene glycol, of which the degree of hydroxyethylation was 1.0 and the degree of de-acetylation was 1.0, was dissolved in $10^{-4}$ $m^3$ (100 ml) of an aqueous 2% acetic acid solution. $5 \times 10^{-2}$ kg (50 g) of ethylene glycol was added to the solution to prepare an aqueous solution of the de-N-acetylated substance which is labelled A-liquid.

$3 \times 10^{-3}$ kg (3 g) of a suspending agent of polyoxyethylene sorbitan laurate and $10^{-2}$ kg (10 g) of acetic anhydride were separately dissolved in $2 \times 10^{-3}$ $m^3$ (2 liters) of toluene placed in a vessel provided with a bow-type stirrer to prepare an acetylating solution containing the suspending agent.

The solution containing the suspending agent was stirred at 600 r.p.m. at the room temperature, the A-liquid was added to it and the de-N-acetlated and etherified chitin was acetylated in a dispersed state for one hour. After the reaction was over, $10^{-3}$ $m^3$ (one liter) of ethanol was added to the reaction mixture under agitation to deposit transparent spherules of denatured chitin. After separating the spherules by filtration and washing the collected spherules with ethanol, the spherules were dispersed in $10^{-3}$ $m^3$ (one liter) of distilled water. The pH of the dispersion was made 8.0 by a sodium hydroxide solution.

The spherules were then separated by filtration and the collected spherules were washed with water to remove sodium acetate and sodium hydroxide adhering thereto to obtain the spherical gel-like particles from $5 \times 10^{-5}$ m (50 $\mu$) to $2.5 \times 10^{-4}$ m (250 $\mu$) in diameter. This material contained as much as 15 times by weight of water, and was insoluble in an aqueous 5% acetic acid solution. The freeze-dried product obtained therefrom showed no adsorption band at 1500 to 1530 $cm^{-1}$ characteristic of an amino group in an infrared absorption spectrum thereof. Elementary analytical values were C: 46.5%, H: 6.5%, O: 40.3% and N: 6.7% which were very similar to those for chitin.

Example 13

A solution was prepared by dissolving $5 \times 10^{-3}$ kg (5 g) of de-N-acetylated methylchitin having a degree of methylation of 0.5 and a degree of de-N-acetylation of 0.9 in $10^{-4}$ $m^3$ (100 ml) of an aqueous 5% acetic acid solution. $5 \times 10^{-2}$ kg (50 g) of ethylene glycol dimethyl ether were added to this solution to form a uniform solution referred to as B-liquid.

$3 \times 10^{-3}$ kg (3 g) of a suspending agent of sorbitan monolaurate and $2 \times 10^{-2}$ kg (20 g) of propionic anhydride were separately admixed with $2 \times 10^{-3}$ $m^3$ (2 liters) of xylene placed in a vessel provided with a bow-type stirrer to prepare a solution containing the suspending agent. At a temperature of 50°C, the B-liquid was added slowly to this solution under agitation at 600 r.p.m. for propionylation of the de-N-acetylated methylchitin for one hour. After the reaction was over, $10^{-3}$ $m^3$ (one liter) of ethanol was added to the reaction mixture under agitation to deposit transparent spherical particles. After the same treatments as in Example 12, $5 \times 10^{-2}$ kg (50 g) of gel-like spherical particles in accordance with the present invention $10^{-4}$ m (100 $\mu$) to $3 \times 10^{-4}$ m (300 $\mu$) in diameter were obtained containing water. The thus-obtained material did not dissolve in aqueous 1N hydrochloric acid solution, aqueous 2N sodium hydroxide solution or aqueous 10% sodium carbonate solution. The freeze-dried product obtained therefrom showed an elementary analytical data of C: 50.5%, H: 6.7%, O: 36.4% and N: 6.4%.

Example 14

The procedure of Example 12 was repeated except that a uniform mixture of $10^{-1}$ kg (100 g) of A-liquid and $10^{-3}$ $m^3$ (one liter) of the solution described in Example 12 containing a suspending agent were introduced into a static mixer (element number of 10), instead of the A-liquid as in Example 12, to obtain gel-like transparent spherical particles in accordance with this invention. The particle diameter of the gel-like spherules was $10^{-5}$ m (10 $\mu$) to $5 \times 10^{-5}$ m (50 $\mu$). The spherules did not dissolve into aqueous 1N hydrochloric solution, aqueous 2N sodium hydroxide solution or aqueous 10% sodium carbonate solution.

Example 15

The procedure of Example 12 was repeated using the de-N-acetylated and etherified chitins and the acylating agents shown in Table 10. Gel-like spherical particles in accordance with the present invention were obtained. The freeze-dried products obtained therefrom showed an elementary analytical data indicated in Table 10, and they did not show an infrared absorption band at 1500 to 1530 $cm^{-1}$ characteristic of an amino group. The products did not dissolve in acids or in alkaline solutions.

TABLE 10

| | De-N-acety and etherified chitin | | Acylating agent | Elementary Analytical Data (%) | | | |
|---|---|---|---|---|---|---|---|
| | Degree of etherification | Degree of de-N-acetylation | | C | H | O | N |
| De-N-acetylated and etherified chitin with glycerol | 0.3 | 0.5 | Butyric anhydride | 52.0 | 7.5 | 34.4 | 6.1 |
| De-N-acetylated ethylchitin | 0.5 | 0.8 | Propionic anhydride | 50.0 | 7.1 | 36.5 | 6.4 |

Example 16

The gel-like spherical particles obtained in Example 12 were water-sifted to obtain particles of a size of $5 \times 10^{-5}$ m (50 $\mu$) to $1.5 \times 10^{-4}$ m (150 $\mu$). The thus-selected particles were packed in a column $2 \times 10^{-2}$ m (2 cm) in diameter having a volume of $1.5 \times 10^{-4}$ $m^3$ (150 ml). The column was used to separate substances as follows:

$2 \times 10^{-6}$ $m^3$ (2 ml) of aqueous solutions containing $2 \times 10^{-5}$ kg (20 mg) of glucose, $2 \times 10^{-5}$ kg (20 mg) of blue dextran of molecular weight of 2,000,000 and $2 \times 10^{-5}$ kg (20 mg) of dextran of molecular weight of 10,000 in distilled water were developed on the column. Distilled water was poured into the column at a volume velocity of $1.66 \times 10^{-8}$ $m^3$/s (1 ml/min). By identification of eluted substances in the aqueous effluent, the position of each eluted substance in the fraction of the aqueous effluent was determined. The results are shown in Table 11.

TABLE 11

| Eluted substance | Position of the eluted substance in the effluent — $m^3$ (ml) |
|---|---|
| Blue dextran | $5.5 \times 10^{-5}$ – $6.5 \times 10^{-5}$ (55–65) |
| Dextran | $9.0 \times 10^{-5}$ – $10^{-4}$ (90–100) |
| Glucose | $1.5 \times 10^{-4}$ – $1.6 \times 10^{-4}$ (150–160) |

As seen from Table 11, the gel-like spherical particles of the present invention can separate substances and so are effective packing materials for chromatography. In addition, it was found that no blue dextran diffused into the gel-like spherical particles after this experiment.

Example 17

In a basket-type centrifuging tube provided with a nylon-net $10^{-1}$ kg (100 g) of the gel-like spherical particles obtained in Example 12 were introduced and centrifuged until the water-content thereof became 2 kg per kg of the dried weight of the particles. Then, the dehydrated particles were soaked in an aqueous 43.5% sodium hydroxide solution, present in an amount of 23 times by weight of the dehydrated particles, at a temperature of 10°C for 3 hours under agitation. Then, excess alkali was removed until the amount of alkali became 3 times by weight of the dried weight of the particles. After leaving the thus-treated particles to stand for 2 hours at a temperature of 0°C, they were frozen for one hour at a temperature of –20°C.

Separately, epichlorohydrin was dissolved in 50 times by weight of isopropyl alcohol in an amount of 2 moles per mole of pyranose rings of the particles. This solution was placed in a flask provided with a stirrer at a temperature of 0 to 5°C.

The pre-treated frozen material was added to the solution in the flask under agitation and reacted for 5 hours. The reaction was continued for a further 5 hours at a temperature of 15°C. After the reaction was over, the cross-linked product was separated by filtration and washed with ethanol, and then dispersed in water. The dispersion was neutralized using aqueous 1N hydrochloric acid with external cooling. The product deposited was filtered and washed with water to obtain cross-linked spherical particles. According to the infrared absorption spectrum of the cross-linked particles, they had not been de-acetylated. Its degree of cross-linking was determined to be 0.12 per pyranose ring from elementary analytical data.

## Claims

1. A chitin derivative obtained by acylation of a de-N-acetylated and etherified chitin represented by the formula (1):

$$[C_6H_8O_3 \,.\, (NH_2)_x \,.\, (NHCOCH_3)_y \,.\, (OR)_a \,.\, (OH)_b]_n \qquad (1)$$

wherein

R represents at least one group selected from a carboxyalkyl group with two to four carbon atoms, a hydroxyethyl group, a hydroxypropyl group, a dihydroxypropyl group or an alkyl group with one to three carbon atoms, $x$ is a number of 0.1 to 1.0, $y = 1.0 - x$, $a$ is a number of 0.1 to 1.0, and $b = 1.0 - a$,

or a salt thereof.

2. A chitin derivative according to claim 1, wherein the de-N-acetylated and etherified chitin is a de-N-acetylated carboxymethylchitin, a de-N-acetylated carboxyethylchitin, a de-N-acetylated carboxypropylchitin, a de-N-acetylated methylchitin, a de-N-acetylated ethylchitin, a de-N-acetylated propylchitin or a salt thereof.

3. A chitin derivative according to claim 1 or 2, wherein the salt is an alkali metal salt, an alkaline earth metal salt or an ammonium salt.

4. A chitin derivative according to any one of the preceding claims wherein the degree of etherification of the de-N-acetylated and etherified chitin is from 0.3 to 1.0 per pyranose ring.

5. A chitin derivative according to any one of the preceding claims wherein the de-N-acetylated and etherified chitin is a de-N-acetylated carboxymethylchitin, a de-N-acetylated carboxyethylchitin, a de-N-acetylated carboxypropylchitin, a de-N-acetylated hydroxyethychitin, a de-N-acetylated hydroxypropylchitin, a de-N-acetylated dihydroxypropylchitin or a salt thereof with a degree of de-N-acetylation of from 0.2 to 0.6.

6. A chitin derivative according to any one of claims 1 to 4, wherein the de-N-acetylated and etherified chitin is a de-N-acetylated methylchitin, a de-N-acetylated ethylchitin, a de-N-acetylated propylchitin or a salt thereof with a degree of de-N-acetylation of from 0.5 to 1.0.

7. A chitin derivative according to claim 6 wherein the degree of de-N-acetylation is from 0.5 to 0.9.

8. A chitin derivative according to any one of the preceding claims, wherein at least two different R substituents are present in the de-N-acetylated and etherified chitin.

9. A material at least the outer surface of which comprises a chitin derivative as claimed in any one of the preceding claims.

10. A material according to claim 9 which is shaped.

11. A material according to claim 9 or 10 which is in the form of a granule, sphere, film, fiber, hollow fiber, rod or any other three-dimensional structure.

12. A material according to any one of claims 9 to 11 which has a cellular structure.

13. A material according to any one of claims 9 to 12 the interior of which comprises the de-N-acetylated and etherified chitin of formula (I) or a salt thereof.

14. A process for producing a chitin derivative as claimed in any one of claims 1 to 8 or a material as claimed in any one of claims 9 to 13 which process comprises contacting an aqueous solution of the de-N-acetylated and etherified chitin or a salt thereof with an anhydride of an organic acid.

15. A process according to claim 14 wherein the organic acid anhydride is the anhydride of an aliphatic or aromatic acid or a mixture thereof.

16. A process according to claim 14 or 15 wherein the de-N-acetylated and etherified chitin contacts the organic acid anhydride in the presence of an organic acid.

17. A process according to any one of claims 14 to 16, wherein the aqueous solution of the de-N-acetylated and etherified chitin contacts a mixture of the organic acid anhydride and a suspending agent.

18. A process according to any one of claims 14 to 17 wherein after acylation the acylated reaction product is cross-linked.

**Revendications**

1. Dérivé de chitine obtenu par acylation d'une chitine dé-N-acétylée et éthérifiée représentée par la formule (I):

$$[C_6H_8O_3 . (NH_2)_x . (NHCOCH_3)_y . (OR)_a . (OH)_b]_n \qquad (I)$$

dans laquelle R représente au moins un groupe choisi parmi un groupe carboxyalkyle ayant 2 à 4 atomes de carbone, un group hydroxyéthyle, un hydroxypropyle, un groupe dihydroxypropyle ou un groupe alkyle ayant 1 à 3 atomes de carbone, x est un nombre de 0,1 à 1,0, y = 1,0 − x, a est un nombre de 0,1 à 1,0 et b = 1,0 − a ou un sel correspondant.

2. Dérivé de chitine selon la revendication 1 dans lequel la chitine dé-N-acétylée et éthérifiée est une carboxyméthylchitine dé-N-acétylée, une carboxyéthylchitine dé-N-acétylée, une carboxypropylchitine dé-N-acétylée, une méthylchitine dé-N-acétylée, une éthylchitine dé-N-acétylée, une propylchitine dé-N-acétylée ou un sel correspondant.

3. Dérivé de chitine selon l'une des revendications 1 ou 2 dans lequel le sel est un sel de métal alcalin, un sel de métal alcalino-terreux ou un sel d'ammonium.

4. Dérivé de chitine selon l'une quelconque des revendications précédentes dans lequel le degré déthérification de la chitine dé-N-acétylée et éthérifiée est compris entre 0,3 et 1,0 par cycle pyranose.

5. Dérivé de chitine selon l'une quelconque des revendications précédentes dans lequel la chitine dé-N-acétylée et éthérifiée est une carboxyméthylchitine dé-N-acétylée, une carboxyethylchitine dé-N-acétylée, une carboxypropylchitine dé-N-acétylée, une hydroxyéthylchitine dé-N-acétylée, une hydroxypropylchitine dé-N-acétylée, une dihydroxypropylchitine dé-N-acétylée ou un sel correspondant, ayant un degré de dé-N-acétylation de 0,2 à 0,6.

6. Dérivé de chitine selon l'une quelconque des revendications 1 à 4, dans lequel la chitine dé-N-acétylée et éthérifiée est une méthylchitine dé-N-acétylée, une éthylchitine dé-N-acétylée, une propylchitine dé-N-acétylée ou un sel correspondant, avec un degré de dé-N-acétylation de 0,5 à 1,0.

7. Dérivé de chitine selon la revendication 6, dans lequel le degré de dé-N-acétylation est compris entre 0,5 et 0,9.

8. Dérivé de chitine selon l'une quelconque des revendications précédentes, dans lequel au moins deux substituants R différents sont présents dans la chitine dé-N-acétylée et éthérifiée.

9. Matière dont au moins la surface extérieure comprend un dérivé de chitine tel que revendiqué dans l'une quelconque des revendications précédentes.

10. Matière selon la revendication 9 qui est façonnée.

11. Matière selon la revendication 9 ou 10, qui est sous forme de granule, de sphère, de pellicule, de fibre, de fibre creuse, de tige ou de tout autre structure tridimensionnelle.

12. Matière selon l'une quelconque des revendications 9 à 11, qui a une structure cellulaire.

13. Matière selon l'une quelconque des revendications 9 à 12, dont l'intérieur comprend la chitine dé-N-acétylée et éthérifiée de formule (I) ou un sel correspondant.

14. Procédé pour produire un dérivé de chitine selon l'une quelconque des revendications 1 à 8 ou une matière selon l'une quelconque des revendications 9 à 13, ce procédé comprenant la mise en contact d'une solution aqueuse de chitine dé-N-acétylée et éthérifiée ou d'un sel correspondant avec un anhydride d'un acide organique.

15. Procédé selon la revendication 14, dans lequel l'anhydride d'acide organique est l'anhydride d'un acide aliphatique ou aromatique ou un de leurs mélanges.

16. Procédé selon la revendication 14 ou 15, dans lequel la chitine dé-N-acétylée et éthérifiée est mise en contact avec l'anhydride d'acide organique en présence d'un acide organique.

17. Procédé selon l'une quelconque des revendications 14 à 16, dans lequel la solution aqueuse de la chitine dé-N-acétylée et éthérifiée est mise en contact avec un mélange de l'anhydride d'acide organique et d'un agent de mise en suspension.

18. Procédé selon l'une quelconque des revendications 14 à 17, dans lequel, après l'acylation, le produit réactionnel acylé est réticulé.

**Patentansprüche**

1. Chitin-Derivat der Formel (1)

$$[C_6H_8O_3 \,.\, (NH_2)_x \,.\, (NHCOCH_3)_y \,.\, (OR)_a \,.\, (OH)_b]_n \qquad (1)$$

erhalten durch Acylieren von N-deacetyliertem verethertem Chitin
oder ein Salz dieses Stoffes;
in Formel (1) bedeuten:
R wenigstens eine der nachfolgend aufgeführten Gruppen:
— eine Carboxyalkylgruppe mit 2 bis 4 C-Atomen,
— eine Hydroxyethylgruppe,
— eine Hydroxypropylgruppe,
— eine Dihydroxypropylgruppe,
— eine Alkylgruppe mit 1 bis 3 C-Atomen;
x eine Zahl von 0,1 bis 1,0;
$y = 1{,}0 - x$
a eine Zahl von 0,1 bis 1,0;
$b = 1{,}0 - a$

2. Chitin-Derivat nach Anspruch 1, in welchem das N-deacetylierte und veretherte Chitin
ein N-deacetyliertes Carboxymethyl-Chitin,
ein N-deacetyliertes Carboxyethyl-Chitin,
ein N-deacetyliertes Carboxypropyl-Chitin,
ein N-deacetyliertes Methyl-Chitin,
ein N-deacetyliertes Ethyl-Chitin,
ein N-deacetyliertes Propyl-Chitin,
oder ein Salz eines dieser Stoffe ist.

3. Chitin-Derivat nach Anspruch 1 oder 2, in welchem das Salz ein Alkalimetallsalz, ein Erdalkalimetallsalz oder ein Ammoniumsalz ist.

4. Chitin-Derivat nach irgendeinem der vorausgehenden Ansprüche, in welchem der Veretherungsgrad des N-deacetylierten und veretherten Chitins 0,3 bis 1,0 pro Pyranose-Ring beträgt.

5. Chitin-Derivat nach irgendeinem der vorausgehenden Ansprüche,
in welchem das N-deacetylierte und veretherte Chitin
— ein N-deacetyliertes Carboxymethyl-Chitin,
— ein N-deacetyliertes Carboxyethyl-Chitin,
— ein N-deacetyliertes Carboxypropyl-Chitin,

— ein N-deacetyliertes Hydroxyethyl-Chitin,
— ein N-deacetyliertes Hydroxypropyl-Chitin,
— ein N-deacetyliertes Dihydroxypropyl-Chitin
oder ein Salz dieser Stoffe mit einem N-deacetylierungsgrad von 0,2 bis 0,6 ist.

6. Chitin-Derivat nach irgendeinem der Ansprüche 1 bis 4, in welchem das N-deacetylierte und veretherte Chitin
— ein N-deacetyliertes Methyl-Chitin,
— ein N-deacetyliertes Ethyl-Chitin,
— ein N-deacetyliertes Propyl-Chitin,
oder ein Salz dieser Stoffe mit einem N-deacetylierungsgrad von 0,5 bis 1,0 ist.

7. Chitin-Derivat nach Anspruch 6, in welchem der N-deacetylierungsgrad 0,5 bis 0,9 ist.

8. Chitin-Derivat nach irgendeinem der vorausgehenden Ansprüche, in welchem wenigstens zwei verschiedene Substituenten R im N-deacetylierten und veretherten Chitin vorhanden sind.

9. Ein Stoff, bei dem zumindest die äußere Oberfläche ein Chitin-Derivat nach irgendeinem der vorausgehenden Ansprüche enthält.

10. Ein Stoff nach Anspruch 9, welcher geformt ist.

11. Stoff nach Anspruch 9 oder 10, welcher die Form einer Granalie, Kugel, eines Filmes, einer Hohlfaser, eines Stabes oder einer anderen dreidimensionalen Struktur hat.

12. Stoff nach irgendeinem der Ansprüche 9 bis 11, welcher eine zelluläre Struktur hat.

13. Stoff nach irgendeinem der Ansprüche 9 bis 12, dessen Inneres das N-deacetylierte und veretherte Chitin der Formel (I) oder ein Salz davon enthält.

14. Verfahren zum Herstellen eines Chitin-Derivates nach irgendeinem der Ansprüche 1 bis 8 oder eines Stoffes nach irgendeinem der Ansprüche 9 bis 13, bei welchem Verfahren eine wässrige Lösung von N-deacetyliertem und verethertem Chitin oder ein Salz davon mit dem Anhydrid einer organischen Säure in Kontakt gebracht wird.

15. Verfahren nach Anspruch 14, bei welchem das Anhydrid der organischen Säure ein Anhydrid einer aliphatischen oder aromatischen Säure oder eine Mischung dieser Stoffe ist.

16. Verfahren nach Anspruch 14 oder 15, bei welchem das N-deacetylierten und veretherten Chitin mit dem Anhydrid der organischen Säure in Gegenwart einer organischen Säure in Kontakt gebracht wird.

17. Verfahren nach irgendeinem der Ansprüche 14 bis 16, bei welchem die wässrige Lösung des N-deacetylierten und veretherten Chitins mit einer Mischung des Anhydrids einer organischen Säure und einem Suspensionsmittel in Kontakt gebracht wird.

18. Verfahren nach irgendeinem der Ansprüche 14 bis 17, bei welchem das acylierte Reaktionsprodukt nach dem Acylieren vernetzt wird.